# EUROPÄISCHE PATENTANMELDUNG

(11) **EP 3 896 026 A1**
(43) Veröffentlichungstag der Anmeldung: **20.10.2021**
(21) Anmeldenummer: 21168327.1
(22) Anmeldetag: 14.04.2021
(51) Int. Cl.: B67C 3/00, B67C 3/26

(54) **FÜLLORGAN MIT UMSTELLUNG VON FREISTRAHL AUF SIEBAUSLAUF**

(30) Priorität: 14.04.2020 DE 102020110140
(71) Anmelder: KRONES AG, 93073 Neutraubling (DE)
(72) Erfinder: Knitl, Thomas, 93073 Neutraubling (DE); Soellner, Juergen, 93073 Neutraubling (DE); Fischer, Dr., Sven, 93073 Neutraubling (DE)
(74) Vertreter: Nordmeyer, Philipp Werner

(57) **Zusammenfassung**

Füllorgan (1) zum Befüllen eines Behälters mit einem Füllprodukt, vorzugsweise in einer Getränkeabfüllanlage, das aufweist: einen Produktauslauf (11), der eingerichtet ist, um das Füllprodukt in einen darunter befindlichen Behälter abzugeben; und einen Ausrüstungsabschnitt (30), der als ein erstes Ausrüstungsmittel eine Siebeinrichtung (31) mit einem Sieb (31c) aufweist und eingerichtet ist, um das Sieb (31c) bedarfsweise in einen Siebzustand, in dem sich das Sieb (31c) zwischen dem Produktauslauf (11) und dem Behälter befindet, so dass das Füllprodukt beim Einleiten in den Behälter durch das Sieb (31c) gefiltert wird, und aus dem Siebzustand heraus zu überführen.

## Beschreibung

### Technisches Gebiet

Die vorliegende Erfindung betrifft ein Füllorgan zum Befüllen eines Behälters mit einem Füllprodukt, vorzugsweise in einer Getränkeabfüllanlage, beispielsweise zum Abfüllen von Wasser, Saft, Softdrinks, Smoothies, Milchprodukten und dergleichen.

### Stand der Technik

Zum Abfüllen von Füllprodukten, besonders von flüssigen, pastösen oder eine hohe Viskosität aufweisenden Füllprodukten, sind Füllorgane unterschiedlicher Bauarten bekannt. Beispielsweise werden zum Abfüllen von Milchprodukten und Säften häufig so genannte Freistrahlfüller verwendet, bei denen das Füllprodukt aus einem Füllproduktauslauf des Füllorgans im freien Fall, also unbeeinflusst durch etwaige Führungsvorrichtungen, in den zu befüllenden Behälter einfließt. Der Durchfluss des Füllprodukts durch einen solchen Freistrahlfüller wird üblicherweise durch ein Ventil gesteuert, das einen Ventilkegel umfasst, der in einer zu dem Ventilkegel komplementär geformten Ventilaufnahme sitzt. Durch Anheben des Ventilkegels aus der Ventilaufnahme wird so der Füllvorgang gestartet, und durch anschließendes Absenken des Ventilkegels auf den Ventilsitz wird der Füllvorgang wieder beendet.

Es ist bekannt, das Füllventil mit einem Sieb auszustatten, um zu verhindern, dass Fremdpartikel während des Abfüllens in den Behälter gelangen. Die JP 5222817 B2 schlägt diesbezüglich vor, ein Sieb im unteren Bereich eines Innenzylinders des Füllventils zu installieren. Aus der JP 2013-112355 A2 und der JP 2007-290743 A2 ist die Verwendung siebartiger Elemente zur Modifikation des Flüssigkeitsstroms bekannt.

Die Siebe aus dem genannten Stand der Technik sind integraler Bestandteil des jeweiligen Füllorgans. Sie können zwar wie im Fall der JP 5222817 B2 gegebenenfalls entfernt und ersetzt werden, beispielsweise zum Zweck der Reinigung oder des Austauschs, ein kombinierter Betrieb des Füllorgans mit oder ohne Sieb, je nach Bedarf, ist jedoch nicht oder nicht ohne weiteres möglich. Denn um das Füllorgan mit oder alternativ ohne Sieb zu betreiben, muss der Füllbetrieb unterbrochen und das Füllorgan durch einen mechanischen/manuellen Eingriff teilweise zerlegt werden.

### Darstellung der Erfindung

Eine Aufgabe der Erfindung besteht darin, ein verbessertes Füllorgan anzugeben, insbesondere die Variabilität des Füllorgans zu verbessern, bei gleichzeitig hoher Qualität und Sicherheit des Abfüllprozesses.

Die Aufgabe wird durch ein Füllorgan mit den Merkmalen des Anspruchs 1 gelöst. Vorteilhafte Weiterbildungen folgen aus den Unteransprüchen, der folgenden Darstellung der Erfindung sowie der Beschreibung bevorzugter Ausführungsbeispiele.

Das Füllorgan gemäß der Erfindung dient zum Befüllen eines Behälters mit einem Füllprodukt. Das Füllorgan kommt besonders bevorzugt in einer Getränkeabfüllanlage zum Einsatz, beispielsweise zum Abfüllen von Wasser, Saft, Softdrinks, Smoothies, Milchprodukten und dergleichen. Das Füllorgan ist geeignet, um klare Füllprodukte, wie etwa Wasser, Milchprodukte sowie Füllprodukte unterschiedlicher Viskosität und/oder versetzt mit Zusatzkomponenten, wie etwa Sirup, Pulpe, Fruchtstückchen, Fasern und dergleichen, abzufüllen.

Das Füllorgan weist einen Produktauslauf auf, der eingerichtet ist, um das Füllprodukt in einen darunter befindlichen Behälter abzugeben. Die Bezeichnung "darunter" ist hierbei in Schwerkraftrichtung zu sehen. Generell gilt, dass bei bestimmungsgemäßer Anwendung des Füllorgans räumliche Beziehungen, wie etwa "oberhalb", "unterhalb", "darunter" usw., eindeutig definiert sind. Das Füllorgan weist ferner einen Ausrüstungsabschnitt auf, der als ein erstes Ausrüstungsmittel eine Siebeinrichtung mit einem Sieb aufweist und eingerichtet ist, um das Sieb bedarfsweise in einen Siebzustand, in dem sich das Sieb zwischen dem Produktauslauf und dem Behälter befindet, so dass das Füllprodukt beim Einleiten in den Behälter durch das Sieb tritt und dadurch gefiltert wird, und aus dem Siebzustand heraus zu überführen. Das Sieb kann demnach je nach Füllprodukt und/oder Abfüllbedingungen in den Füllproduktstrom eingebracht oder aus diesem entfernt werden.

Das Füllorgan ermöglicht dadurch einen besonders variablen Abfüllbetrieb. Klare Produkte, wie beispielsweise Wasser, können mit in den Füllproduktstrom eingefahrenem Sieb abgefüllt werden, wodurch eine etwaige Kontamination des abgefüllten Produkts durch Fremdpartikel unterbunden oder zumindest vermindert wird. Das Sieb fungiert in diesem Fall als letzte Barriere für Fremdpartikel. Auf der anderen Seite können beispielsweise viskose Füllprodukte oder Produkte mit Fasern und/oder Fruchtstückchen ohne Sieb abgefüllt werden, wodurch das Füllorgan hochflexibel anwendbar ist. Die Füllkurve kann bei eingefahrenem Sieb gegebenenfalls angepasst werden.

Das Sieb ermöglicht ferner eine Verbesserung des Nachtropfverhaltens. Öffnungen bzw. Maschen des Siebs können so dimensioniert und angeordnet sein, dass ein unkontrolliertes Nachtropfen, beispielsweise von Flüssigkeit, die am unteren Bereich eines Ventilkegels anhaftet, verhindert oder zumindest vermindert wird.

Zur Reinigung des Siebs kann dieses im ein- oder ausgefahrenen Zustand von unten mit einem Reinigungsstrahl aus einer entsprechenden Düse beaufschlagt und so von unten ausgespritzt werden.

Vorzugsweise umfasst die Siebeinrichtung eine das Sieb aufweisende Siebkappe, wobei der Ausrüstungsabschnitt eingerichtet ist, um die Siebkappe im Siebzustand so gegen einen Gehäuseabschnitt des Füllorgans zu drücken, dass die Siebkappe den Produktauslauf fluiddicht umgibt, um zu verhindern, dass Füllprodukt am Sieb vorbei aus dem Produktauslauf austritt. Auf diese Weise wird stets ein sauberes Abfüllen erzielt, ohne dass die Anwendungsvariabilität des Füllorgans eingeschränkt ist, insbesondere ohne dass eine teilweise Demontage des Füllorgans für eine Installation oder Entfernung des Siebs erforderlich ist.

Vorzugsweise umfasst die Bewegung der Siebeinrichtung in den und aus dem Siebzustand eine Schwenkbewegung, wodurch die oben dargelegte Variabilität auf maschinenbaulich einfache und zuverlässige Weise realisierbar ist. Die Siebeinrichtung weist in diesem Fall vorzugsweise einen Schwenkarm auf, der an einer Schwenkwelle des Ausrüstungsabschnitts gehalten und durch diese schwenkbar ist.

Vorzugsweise umfasst die Bewegung der Siebeinrichtung in den und aus dem Siebzustand eine translatorische Bewegung, besonders bevorzugt in einer Axialrichtung des Produktauslaufs. Auf diese Weis lässt sich das entsprechende Ausrüstungsmittel an das Füllorgan anpressen bzw. andrücken, um eine zuverlässige und gegebenenfalls fluiddichte Verbindung herzustellen. Die relative translatorische Verschiebung zwischen Füllorgan und Ausrüstungsmittel lässt sich hierbei durch Verschieben des Füllorgans und/oder Verschieben des Ausrüstungsmittels erzielen.

Vorzugsweise ist das Füllorgan für das sogenannte Freistrahlfüllen konzipiert. In diesem Fall ist das Füllorgan so eingerichtet, dass das Füllprodukt aus dem Produktauslauf austritt und dann, zumeist bei atmosphärischem Druck, im freien Fall, also unbeeinflusst durch etwaige Führungsvorrichtungen, in den zu befüllenden Behälter einfließt.

Das Füllprodukt kann dabei durch Drallkörper und/oder eine entsprechende Formgebung des Produktauslaufs in Drall versetzt werden, so dass dieses unter Einwirkung der Zentrifugalkraft in einer Spiralbewegung an der Behälterwand abwärts strömt. Ein etwaiges im Behälter befindliches Gas, das bei der Befüllung durch das Füllprodukt verdrängt wird, kann zentral durch die Behältermündung entweichen. Auf diese Weise lässt sich eine gleichmäßige, ruhige und störungsfreie Abfüllung mit kurzen Füllzeiten realisieren.

Vorzugsweise weist das Füllorgan einen mit dem Produktauslauf in Fluidverbindung stehenden Produktkanal und ein Füllventil mit einem im Produktkanal angeordneten Ventilkegel, einem zumindest abschnittsweise komplementär geformten Ventilsitz sowie einem Aktuator auf, der zur Verschiebung des Ventilkegels entlang einer Axialrichtung des Produktauslaufs eingerichtet ist, so dass der Ventilkegel zur Sperrung des Produktauslaufs in den Ventilsitz und zur Öffnung des Produktauslaufs aus diesem heraus fahrbar ist. Auf diese Weise lässt sich auf maschinenbaulich einfache und zuverlässige Weise ein Freistrahlventil realisieren.

Das Füllventil kann als Sperrventil ausgeführt sein, so dass es auf binäre Weise zwischen einem geschlossenen und einem geöffneten Zustand schaltbar ist. Alternativ kann das Füllventil mit einer Durchflussregelung ausgestattet sein, so dass neben dem geschlossenen Zustand mehrere geöffnete Zustände mit unterschiedlichen Volumendurchflüssen einstellbar sind. Die Regelung des Füllventils kann in diesem Fall diskret oder kontinuierlich erfolgen. Die genannte Durchflussregelung lässt sich beispielsweise dadurch realisieren, dass der Ventilkegel eine zylindrische, sich zum Produktauslauf hin verjüngende Form hat. Der Produktkanal, der im Bereich des Ventilkegels die Form eines Ringkanals hat, wird innenseitig zumindest abschnittsweise von der Außenumfangsfläche des Ventilkegels gebildet. Außen wird der Ringspalt vom Ventilgehäuse begrenzt. Der Ventilkegel ist gemäß diesem Ausführungsbeispiel in Axialrichtung, d.h. nach oben und unten, verschiebbar eingerichtet. Auf diese Weise lässt sich der Ringspalt am Produktauslauf vergrößern und verkleinern. Die Höhenverstellung des Ventilkegels erfolgt innerhalb eines Arbeitsbereichs, d.h. zwischen einer vollständig geöffneten Position und einer geschlossenen Position, vorzugsweise stufenlos.

Vorzugsweise weist der Ausrüstungsabschnitt zusätzlich zur Siebeinrichtung zumindest ein weiteres Ausrüstungsmittel auf. Der Ausrüstungsabschnitt ist in diesem Fall eingerichtet, um das weitere Ausrüstungsmittel in einen Zustand unterhalb des Produktauslaufs und aus diesem Zustand heraus zu überführen. Auf diese Weise kann der Ausrüstungsabschnitt synergetisch zur flexiblen Anwendung eines oder mehrerer weiterer Ausrüstungsmittel genutzt werden, wodurch die Variabilität des Füllorgans weiter erhöht wird.

So kann zumindest eines der weiteren Ausrüstungsmittel eine weitere Siebeinrichtung mit einem Sieb sein, dessen Filtercharakteristik sich vom Sieb des ersten Ausrüstungsmittels unterscheidet. Beispielsweise können somit Fremdpartikel unterschiedlicher Größe aus dem Füllproduktstrom herausgefiltert werden, je nach Füllprodukt und/oder Anwendungsumgebung.

Besonders bevorzugt ist zumindest eines der weiteren Ausrüstungsmittel eine CIP-Kappeneinrichtung mit einer CIP-Kappe. Der Ausrüstungsabschnitt ist in diesem Fall eingerichtet, um die CIP-Kappe bedarfsweise, vorzugsweise für einen Reinigungs- und/oder Sterilisierungsbetrieb, in einen CIP-Zustand, in dem die CIP-Kappe den Produktauslauf verschließt, und aus dem CIP-Zustand heraus zu überführen. Auf diese Weise kann der Ausrüstungsabschnitt synergetisch zur Einstellung eines Siebzustands und eines CIP-Zustands genutzt werden, wodurch die Variabilität des Füllorgans weiter erhöht wird.

Die Bezeichnung "CIP" steht hierbei für "Cleaning-In-Place", ein Reinigungsverfahren, bei dem das Füllorgan zur Reinigung nicht ausgebaut werden muss, sondern im eingebauten Zustand mit einem Reinigungsmedium durchspült bzw. bedämpft werden kann. Der sprachlichen Einfachheit halber umfasst die Bezeichnung "CIP" hierin auch das sogenannte "Sterilizing-In-Place" (SIP), ein Sterilisierungsverfahren, bei dem das Füllorgan auf analoge Weise für eine Sterilisation nicht ausgebaut werden muss, sondern im eingebauten Zustand mit einem Sterilisierungsmedium durchspült bzw. gedämpft werden kann.

Vorzugsweise umfasst die Bewegung der CIP-Kappeneinrichtung in den und aus dem CIP-Zustand eine Schwenkbewegung, wodurch die Variabilität des Füllorgans auf maschinenbaulich einfache und zuverlässige Weise realisierbar ist. In diesem Fall weist die CIP-Kappeneinrichtung vorzugsweise einen Schwenkarm auf, der an einer Schwenkwelle des Ausrüstungsabschnitts gehalten und durch diese schwenkbar ist.

Die CIP-Kappe kann eingerichtet sein, um den Produktauslauf fluiddicht zu verschließen. Alternativ kann die CIP-Kappe eine Öffnung aufweisen und/oder mit einem Ablauf ausgestattet sein, um das Reinigungs- und/oder Sterilisierungsmedium abzuleiten. Die CIP-Kappe kann auch als Dämpfkappe ausgeführt sein, um eine Sterilisation produktführender Komponenten mittels Heißdampf oder dergleichen zu ermöglichen.

Vorzugsweise umfasst die Bewegung der CIP-Kappeneinrichtung in den und aus dem Siebzustand eine translatorische Bewegung der CIP-Kappe, besonders bevorzugt in einer Axialrichtung des Produktauslaufs. Auf diese Weise lässt sich das entsprechende Ausrüstungsmittel an das Füllorgan andrücken, um eine zuverlässige und gegebenenfalls fluiddichte Verbindung herzustellen. Die relative translatorische Verschiebung zwischen Füllorgan und Ausrüstungsmittel lässt sich hierbei durch Verschieben des Füllorgans und/oder Verschieben des Ausrüstungsmittels erzielen.

Vorzugsweise ist der Ausrüstungsabschnitt eingerichtet, um das Sieb und die CIP-Kappe in einen Sieb/CIP-Zustand, in dem sich sowohl das Sieb als auch die CIP-Kappe unterhalb des Produktauslaufs befinden, und aus dem Sieb/CIP-Zustand heraus zu überführen. Daraus ergibt sich als mögliche Variante eine kombinierte Nutzung beider Ausrüstungsmittel, so dass verschiedene Möglichkeiten der Reinigung und/oder Sterilisation des Füllorgans mit oder ohne Sieb realisierbar sind.

Vorzugsweise umfasst die Siebeinrichtung eine das Sieb aufweisende Siebkappe, wobei der Ausrüstungsabschnitt so eingerichtet ist, dass sich im Sieb/CIP-Zustand die Siebkappe angedrückt am Ventilgehäuse befindet, während die CIP-Kappe unmittelbar darunter an die Siebkappe angedrückt ist. Auf diese Weise lassen sich die beiden Ausrüstungsmittel an das Füllorgan andrücken, um eine zuverlässige und gegebenenfalls fluiddichte Verbindung herzustellen.

Vorzugsweise ist das Sieb wechselbar ausgeführt. Die Wechselbarkeit oder Austauschbarkeit dient hierbei nicht unbedingt nur der Reinigung, Wartung oder zum Austausch bei Beschädigung, sondern auf diese Weise können unterschiedliche Filtercharakteristiken je nach Füllprodukt bzw. Anwendung realisiert werden. Hierbei kann beispielsweise das Sieb als kleine modulare Einheit und/oder die Siebkappe und/oder die Siebeinrichtung als größere modulare Einheiten wechselbar ausgeführt sein. Dies gilt analog für etwaige andere Ausrüstungsmittel, insbesondere die CIP-Kappeneinrichtung.

Alternativ kann das Sieb einstückig mit der Siebeinrichtung und insbesondere einstückig mit einem Schwenkarm der Siebeinrichtung ausgebildet sein. Dabei kann das Sieb besonders bevorzugt in das Material der Siebeinrichtung und/oder des Schwenkarms eingearbeitet sein und besonders bevorzugt mittels eines Lasers in das Material eingebracht sein. Auf diese Weise kann durch die einstückige Ausbildung eine stabile und kostengünstige Siebeinrichtung bereitgestellt werden.

Während im Fall mehrerer Ausrüstungsmittel diese vorzugsweise so eingerichtet sind, dass sie unabhängig voneinander schwenkbar bzw. verfahrbar sind, können mehrere Ausrüstungsmittel auch an ein und derselben Schwenkwelle angebracht sein. So kann an einer Schwenkwelle beispielsweise eine Mehrzahl von Siebeinrichtungen angebracht sein, alternativ oder zusätzlich kann am Schwenkarm der Siebeinrichtung eine Mehrzahl von Siebkappen angebracht sein, so dass diese alternativ in den Füllproduktstrom unterhalb des Produktauslaufs eingefahren werden können. Insofern bilden die mehreren Ausrüstungsmittel gemäß dieser Ausführungsform eine Art "Magazin", aus dem das geeignete Ausrüstungsmittel ausgewählt werden kann.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
Figur 1 eine schematische, dreidimensionale Teilansicht eines Füllorgans gemäß einem Ausführungsbeispiel im Normalzustand;
Figur 2 eine schematische, dreidimensionale Teilansicht eines Füllorgans gemäß dem Ausführungsbeispiel der Figur 1 im Siebzustand;
Figuren 3A und 3B schematische Schnittansicht eines Füllorgans aus zwei seitlichen Perspektiven gemäß einem weiteren Ausführungsbeispiel im Normalzustand;
Figuren 4A und 4B schematische Schnittansichten eines Füllorgans aus zwei seitlichen Perspektiven gemäß dem Ausführungsbeispiel der Figuren 3A und 3B mit eingeschwenktem Sieb;
Figuren 5A und 5B schematische Schnittansichten eines Füllorgans aus zwei seitlichen Perspektiven gemäß dem Ausführungsbeispiel der Figuren 3A und 3B im Siebzustand;
Figuren 6A und 6B schematische Schnittansichten eines Füllorgans aus zwei seitlichen Perspektiven gemäß einem weiteren Ausführungsbeispiel mit eingeschwenkter CIP-Kappe;
Figuren 7A und 7B schematische Schnittansichten eines Füllorgans aus zwei seitlichen Perspektiven gemäß dem Ausführungsbeispiel der Figuren 6A und 6B im CIP-Zustand; und
Figuren 8A und 8B schematische Schnittansichten eines Füllorgans aus zwei seitlichen Perspektiven gemäß einem weiteren Ausführungsbeispiel in einem Sieb/CIP-Zustand.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

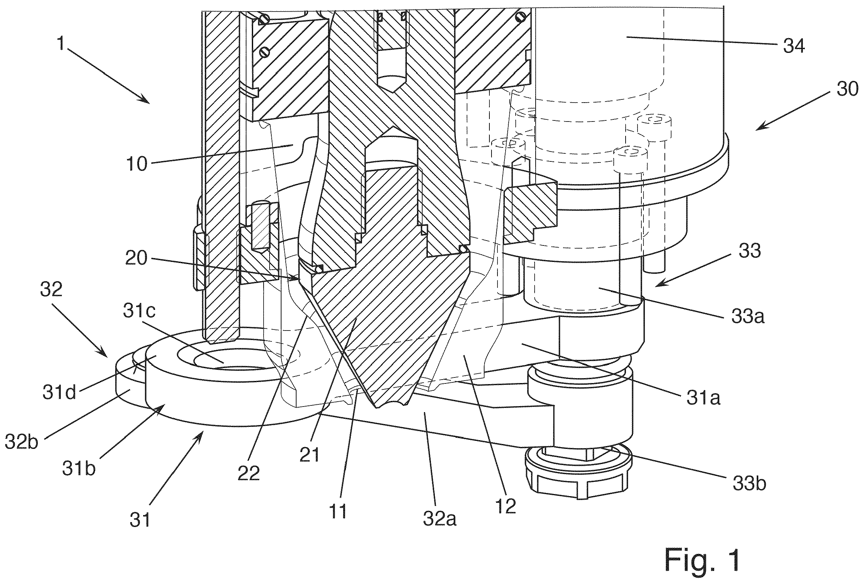

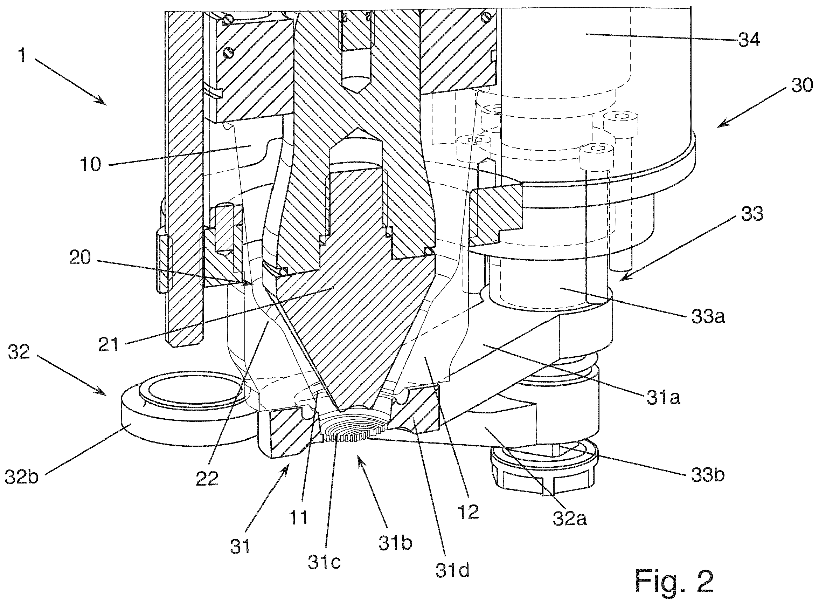

Die Figuren 1 und 2 sind schematische, dreidimensionale Teilansichten eines Füllorgans 1 gemäß einem Ausführungsbeispiel, gezeigt in zwei unterschiedlichen Zuständen, die weiter unten im Detail beschrieben sind. Zunächst sei der Grundaufbau des Füllorgans 1 dargelegt:
Das Füllorgan 1 ist hierin zum Freistrahlfüllen eingerichtet, bei dem das Füllprodukt, zumeist bei atmosphärischem Druck, im freien Fall, also unbeeinflusst durch etwaige Führungsvorrichtungen, in den zu befüllenden Behälter (in den Figuren nicht dargestellt) einfließt. Das Füllprodukt kann dabei durch Drallkörper und/oder eine entsprechende Formgebung eines Produktauslaufs 11 in Drall versetzt werden, so dass dieses unter Einwirkung der Zentrifugalkraft in einer Spiralbewegung an der Behälterwand abwärts strömt. Ein etwaiges im Behälter befindliches Gas, das bei der Befüllung durch das Füllprodukt verdrängt wird, kann zentral durch die Behältermündung entweichen. Auf diese Weise lässt sich eine gleichmäßige, ruhige und störungsfreie Abfüllung mit kurzen Füllzeiten realisieren.

Das Füllorgan 1 kommt bevorzugt in Getränkeabfüllanlagen zum Einsatz, beispielsweise zum Abfüllen von Wasser, Saft, Softdrinks, Smoothies, Milchprodukten und dergleichen. Das Füllorgan 1 ist ferner geeignet, um Füllprodukte unterschiedlicher Viskosität und/oder versetzt mit Zusatzkomponenten, wie etwa Sirup, Pulpe, Fruchtstückchen und dergleichen, abzufüllen.

Das Füllorgan 1 weist einen Produktkanal 10 mit dem oben erwähnten Produktauslauf 11 auf, über den das abzufüllende Füllprodukt in einen darunter befindlichen Behälter einfließt. Das Füllprodukt kann zu diesem Zweck aus einem stromaufwärts des Füllorgans 1 liegenden Füllproduktreservoir (in den Figuren nicht gezeigt) entnommen werden bzw. in den Produktkanal 10 fließen.

Das Füllorgan 1 weist ferner ein Füllventil 20 auf, das einen Ventilkegel 21 und einen zumindest abschnittsweise komplementär geformten Ventilsitz 22 umfasst. Das Füllventil 20 weist ferner einen in den Figuren 1 und 2 nicht dargestellten Aktuator auf, der den Ventilkegel 21 entlang einer Axialrichtung verschieben kann, so dass der Ventilkegel 21 zur Sperrung des Produktkanals 10 bzw. Produktauslaufs 11 und damit zur Unterbrechung des Durchflusses in den Ventilsitz 22 gefahren und zur Öffnung des Produktkanals 10 bzw. Produktauslaufs 11 aus diesem heraus gefahren werden kann.

Das Füllventil 20 kann als Sperrventil ausgeführt sein, so dass es auf binäre Weise zwischen einem geschlossenen und einem geöffneten Zustand schaltbar ist. Alternativ kann das Füllventil 20 mit einer Durchflussregelung ausgestattet sein, so dass neben dem geschlossenen Zustand mehrere geöffnete Zustände mit unterschiedlichen Volumendurchflüssen einstellbar sind. Die Regelung des Füllventils 20 kann in diesem Fall diskret oder kontinuierlich erfolgen.

Die vorstehend genannte Durchflussregelung lässt sich beispielsweise dadurch realisieren, dass der Ventilkegel 21 eine zylindrische, sich zum Produktauslauf 11 hin verjüngende Form hat. Der Produktkanal 10, der im Bereich des Ventilkegels 21 die Form eines Ringkanals hat, wird innenseitig zumindest abschnittsweise von der Außenumfangsfläche des Ventilkegels 21 gebildet. Außen wird der Ringspalt von einem Ventilgehäuse 12 begrenzt bzw. gebildet. Der Ventilkegel 21 ist gemäß dem vorliegenden Ausführungsbeispiel in Axialrichtung, d.h. nach oben und unten, verschiebbar eingerichtet. Auf diese Weise lässt sich der Ringspalt am Produktauslauf 11 vergrößern und verkleinern. Die Höhenverstellung des Ventilkegels 21 erfolgt innerhalb eines Arbeitsbereichs, d.h. zwischen einer vollständig geöffneten Position und einer geschlossenen Position oder einer Position des minimalen Durchflusses, vorzugsweise stufenlos.

Das Füllorgan 1 weist ferner einen Ausrüstungsabschnitt 30 auf, der eingerichtet ist, um das Füllorgan 1, insbesondere den Produktauslauf 11, mit einem oder mehreren Ausrüstungsmitteln zu versehen. Die Ausrüstungsmittel sind vorzugsweise kappenartige Hilfsmittel, Werkzeuge oder dergleichen, die vom Ausrüstungsabschnitt 30 unter den Produktauslauf 11 gefahren werden können, um den Produktauslauf 11 vollständig oder teilweise zu verschließen, den Produktdurchfluss zu modifizieren, das Produkt zu filtern oder dergleichen.

Im vorliegenden Ausführungsbeispiel sind zwei Ausrüstungsmittel vorgesehen, eine Siebeinrichtung 31 und eine CIP-Kappeneinrichtung 32.

Die Bezeichnung "CIP" steht hierbei für "Cleaning-In-Place", ein Reinigungsverfahren, bei dem das Füllorgan 1 zur Reinigung nicht ausgebaut werden muss, sondern im eingebauten Zustand mit einem Reinigungsmedium durchspült bzw. bedämpft werden kann. Der sprachlichen Einfachheit halber umfasst die Bezeichnung "CIP" hierin auch das sogenannte "Sterilizing-In-Place" (SIP), ein Sterilisierungsverfahren, bei dem das Füllorgan 1 auf analoge Weise für eine Sterilisation nicht ausgebaut werden muss, sondern im eingebauten Zustand mit einem Sterilisierungsmedium durchspült bzw. bedämpft werden kann.

Der Ausrüstungsabschnitt 30 ist eingerichtet, um die Siebeinrichtung 31 und die CIP-Kappeneinrichtung 32 bedarfsweise und vorzugsweise unabhängig voneinander zu schwenken. In anderen Worten, die Siebeinrichtung 31 und die CIP-Kappeneinrichtung 32 werden durch eine Schwenkbewegung in ihre jeweilige Arbeitsposition, in der sie sich entsprechend unter dem Produktauslauf 11 befinden, und aus der Arbeitsposition heraus gebracht.

Es sei darauf hingewiesen, dass alternativ oder zusätzlich eine translatorische Bewegung oder eine Bewegung entlang einer beliebigen anderen Trajektorie realisiert werden kann, solange die Ausrüstungsmittel in ihre jeweilige Arbeitsposition und aus dieser heraus gebracht werden können, ohne dass ein manueller Eingriff erforderlich ist oder das Füllorgan 1 zur Installation bzw. Entfernung der Ausrüstungsmittel teilweise oder vollständig zerlegt werden muss.

Gemäß der Ausführungsform der Figuren 1 und 2 weist die Siebeinrichtung 31 einen Schwenkarm 31a, der an einer Schwenkwelle 33a einer Schwenkeinrichtung 33 des Ausrüstungsabschnitts 30 gehalten und um diese oder eine Achse der Schwenkwelle 33a schwenkbar ist, sowie eine Siebkappe 31b auf, die am anderen Ende des Schwenkarms 31a vorgesehen ist.

Der Schwenkarm 31a und/oder die Siebkappe 31b sind vorzugsweise aus Kunststoff oder Edelstahl gefertigt. Schwenkarm 31a und Siebkappe 31b können mehrteilig oder einstückig ausgebildet sein.

Die Siebkappe 31b umfasst ein Sieb 31c (vgl. Figur 2), das als Filter eingerichtet ist, um Partikel oberhalb einer bestimmten Größe, etwa Schmutz, Metallspäne und dergleichen, aufzufangen und zu verhindern, dass diese in den abzufüllenden Behälter gelangen. Zu diesem Zweck weist das Sieb 31c eine Vielzahl von Öffnungen auf, deren Größe und Anordnung die Filterwirkung bestimmen.

Die Öffnungen des Siebs 31c können beispielsweise mittels eines Lasers in ein geeignetes Material eingebracht werden, wodurch das Sieb 31c auf einfache Weise, einteilig bzw. einstückig herstellbar ist.

Diesbezüglich sei darauf hingewiesen, dass die Siebkappe 31b, inklusive Sieb 31c, direkt in den Schwenkarm 31a eingelasert werden kann, wodurch die Herstellung der Siebeinrichtung 31 besonders einfach und ressourcenschonend durchführbar ist.

Alternativ kann das Sieb 31c durch 3D-Druck, Sintern oder auf andere Weise hergestellt werden. Das Sieb 31c kann alternativ maschen- oder netzartig ausgebildet sein. Vorzugsweise wird das Sieb 31c von einem Stabilisierungsabschnitt 31d, der im vorliegenden Ausführungsbeispiel ringförmig ausgebildet ist, gehalten bzw. stabilisiert.

Die Öffnungsdurchmesser des Siebs 31c können im Bereich von 0,4 bis 0,8 mm liegen, der beispielsweise zum Abfüllen von Wasser geeignet ist. Zum Abfüllen von Ölen sind Öffnungsdurchmesser im Bereich von 0,05 mm geeignet. Das Sieb 31c kann somit neben größeren Fremdpartikeln auch Mikroplastik herausfiltern.

Analog weist der CIP-Kappenabschnitt 32 einen Schwenkarm 32a auf, der ebenfalls an einer Schwenkwelle 33b gehalten und um diese oder eine Achse der Schwenkwelle 33b schwenkbar ist. Die Schwenkwellen 33a und 33b können identisch oder unabhängige Komponenten sein. So können die Schwenkwellen 33a und 33b beispielsweise konzentrisch zueinander angeordnet und unabhängig voneinander betätigbar sein.

Der CIP-Kappenabschnitt 32 weist ferner eine CIP-Kappe 32b auf, die bezüglich der Schwenkwelle 33b am anderen Ende des Schwenkarms 32a vorgesehen ist.

Der Schwenkarm 32a und/oder die CIP-Kappe 32b sind vorzugsweise aus Kunststoff oder Edelstahl gefertigt. Schwenkarm 32a und CIP-Kappe 32b können mehrteilig oder einstückig ausgebildet sein.

Die CIP-Kappe 32b ist eingerichtet, um den Produktauslauf 11 während der Durchführung einer Reinigung und/oder Sterilisierung des Füllorgans 1 zu verschließen. Die CIP-Kappe 32b kann eingerichtet sein, um den Produktauslauf 11 fluiddicht zu verschließen.

Alternativ kann die CIP-Kappe 32b eine Öffnung aufweisen und/oder mit einem Ablauf ausgestattet sein, um das Reinigungs- und/oder Sterilisierungsfluid abzuleiten. Die CIP-Kappe 32b kann auch als Dämpfkappe ausgeführt sein, um eine Sterilisation produktführender Komponenten mittels Heißdampf oder dergleichen zu ermöglichen.

Zur Reinigung und/oder Sterilisation wird ein entsprechendes Behandlungsmedium über die Kanäle, die im Produktionsbetrieb das Füllprodukt führen, in das Füllorgan 1 eingeleitet. Das Behandlungsmedium kann dann aufgrund der aufgesetzten CIP-Kappe 32b nicht über den Produktauslauf 11 ablaufen, sondern wird beispielsweise über einen separaten Kanal abgezogen, welcher beispielsweise oberhalb des Produktauslaufs 11 abzweigt oder auch an der CIP-Kappe 32b vorgesehen sein kann.

Das Sieb 31c kann wechselbar ausgeführt sein. Die Wechselbarkeit oder Austauschbarkeit dient hierbei nicht unbedingt nur zur Reinigung, Wartung oder zum Austausch bei Beschädigung, sondern auf diese Weise können unterschiedliche Filtercharakteristiken je nach Füllprodukt bzw. Anwendung realisiert werden. Hierbei kann beispielsweise das Sieb 31c als kleine modulare Einheit und/oder die Siebkappe 31b und/oder die Siebeinrichtung 31 als größere modulare Einheiten wechselbar ausgeführt sein. Eines oder mehrere dieser Merkmale zur Wechselbarkeit können analog für die CIP-Kappeneinrichtung 32 vorgesehen sein.

Alternativ oder zusätzlich können mehrere Ausrüstungsmittel als Siebeinrichtung 31 implementiert sein, wodurch unterschiedliche Filtercharakteristiken realisierbar und ohne Umrüstung des Füllorgans 1 einstellbar sind.

Die Figur 1 zeigt einen Zustand, in dem sich sowohl die Siebkappe 31b als auch die CIP-Kappe 32b außerhalb der Arbeitsposition befinden, d.h. nicht unterhalb des Produktauslaufs 11 angeordnet sind. Dieser Zustand wird hierin auch als "Normalzustand" bezeichnet. Im Normalzustand kann das Füllprodukt im Freistrahl und ohne weitere Modifikation in den Behälter fließen.

Die Figur 2 zeigt einen Zustand, in dem die Siebkappe 31b in die Arbeitsposition geschwenkt ist, d.h. das Sieb 31c befindet sich unterhalb des Produktauslaufs 11, so dass das Füllprodukt oder eine andere Flüssigkeit beim Verlassen des Produktauslaufs 11 durch das Sieb 31c fließt und somit gefiltert wird. Dieser Zustand wird hierin auch als "Siebzustand" bezeichnet.

Die Siebkappe 31b, insbesondere der ringförmige Stabilisierungsabschnitt 31d, kann im Siebzustand mit einem unteren Abschnitt des Ventilgehäuse 12 fluiddicht in Kontakt stehen, um zu verhindern, dass Flüssigkeit unkontrolliert durch einen Spalt am Sieb 31c vorbei aus dem Füllorgan 1 austritt. Dies gilt analog für die CIP-Kappe 32b.

Um das Ausrüstungsmittel, wie etwa die Siebkappe 31b und/oder die CIP-Kappe 32b, mit dem Ventilgehäuse 12 des Füllorgans 1 in Kontakt zu bringen, kann das entsprechende Ausrüstungsmittel an das Füllorgan 1 angedrückt werden. Zu diesem Zweck kann das Füllorgan 1 und/oder das Ausrüstungsmittel in der Axialrichtung translatorisch bewegbar eingerichtet sein. In diesem Fall umfasst die Bewegung des Ausrüstungsgegenstands in die Arbeitsposition somit eine Schwenk- und eine Translationsbewegung.

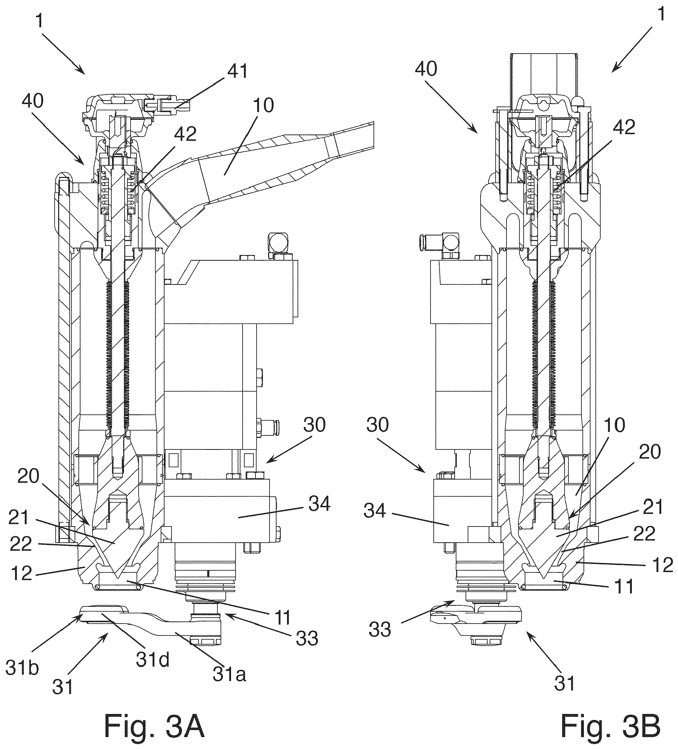

Die Figuren 3A bis 8B zeigen ein Füllorgan 1 gemäß weiterer Ausführungsbeispiele in unterschiedlichen Zuständen, als Schnittansichten aus jeweils zwei seitlichen Perspektiven.

Die Bauformen der Füllorgane 1 gemäß den weiteren Ausführungsbeispielen ähneln der Bauform der Figuren 1 und 2, wobei das Füllorgan 1 mit einem beispielhaften Aktuator 40 gezeigt ist, der zur Betätigung des Ventilkegels 21 eingerichtet ist.

Der Aktuator 40 kann beispielsweise elektromotorisch, magnetisch, pneumatisch oder hydraulisch arbeiten. In den vorliegenden Beispielen weist der Aktuator 40 einen Medienanschluss 41 auf, über den ein Arbeitsmedium, wie etwa Elektrizität, Druckluft oder dergleichen, zugeführt werden kann, um den Ventilkegel 21 zu betätigen. Ferner weist der Aktuator 40 eine Feder 42, vorzugsweise als Spiralfeder ausgebildet, auf, die dazu dient, den Ventilkegel 21 in eine Arbeitsposition, beispielsweise die Absperrposition oder die vollständig geöffnete Position, vorzuspannen.

Der Ausrüstungsabschnitt 30 weist ebenfalls einen Aktuator 34 auf, der eingerichtet ist, um die Ausrüstungsmittel, d.h. im vorliegenden Fall die Siebkappe 31b und/oder die CIP-Kappe 32b, in die entsprechende Arbeitsposition und aus dieser heraus zu bewegen. Der Aktuator 34 kann einen Elektromotor umfassen, um die Ausrüstungsmittel mittels der Schwenkeinrichtung 33 zu schwenken. Der Aktuator 34 kann ferner einen Hubaktuator, beispielsweise elektromotorisch, magnetisch, pneumatisch oder hydraulisch realisiert, umfassen, um die oben erwähnte etwaige Hubbewegung der Ausrüstungsmittel und/oder des Füllorgans 1 (genauer gesagt, zumindest dessen Ventilgehäuse 12) relativ zum Ausrüstungsabschnitt 30 zu implementieren.

Die Figuren 3A und 3B zeigen ein Füllorgan 1 mit einer Siebeinrichtung 31 als Ausrüstungsmittel im Normalzustand, in dem sich die Siebkappe 31b der Siebeinrichtung 31 außerhalb der Arbeitsposition befinden.

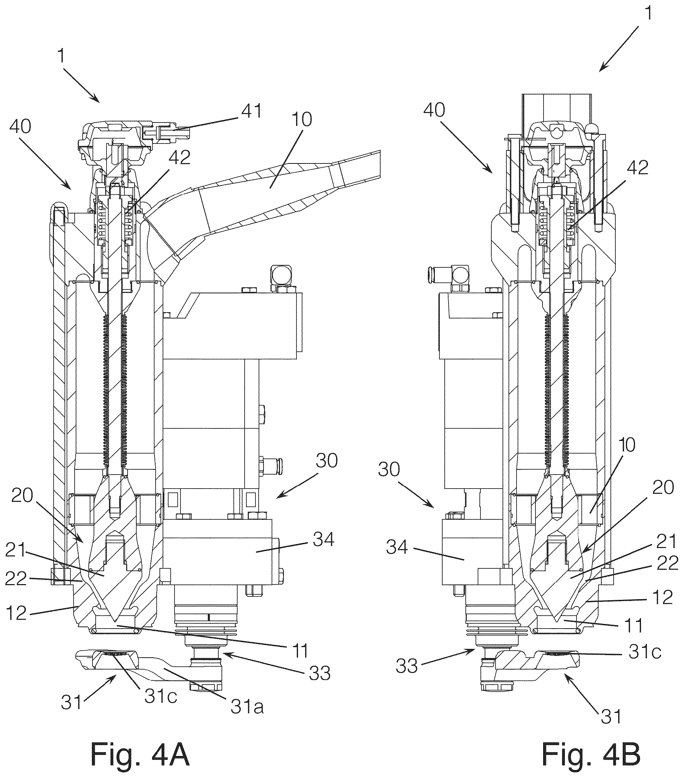

Die Figuren 4A und 4B zeigen das Füllorgan 1 gemäß dem Ausführungsbeispiel der Figuren 3A und 3B in einem Zustand, in dem die Siebkappe 31b eingeschwenkt ist, d.h. sich unterhalb des Produktauslasses 11 befindet.

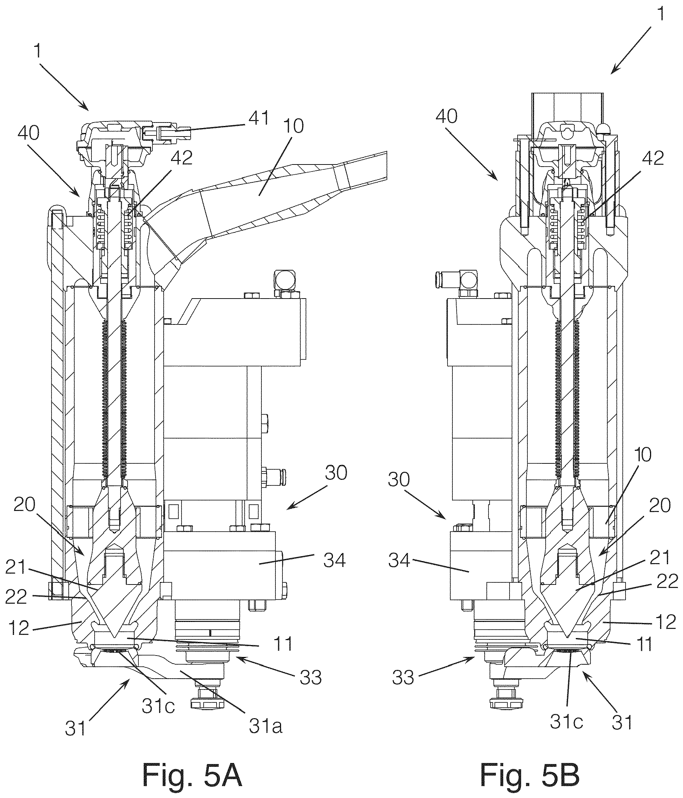

Die Figuren 5A und 5B zeigen das Füllorgan 1 gemäß dem Ausführungsbeispiel der Figuren 3A und 3B im Siebzustand, in dem sich die Siebkappe 31b angedrückt an das Ventilgehäuse 12 in der Arbeitsposition befindet.

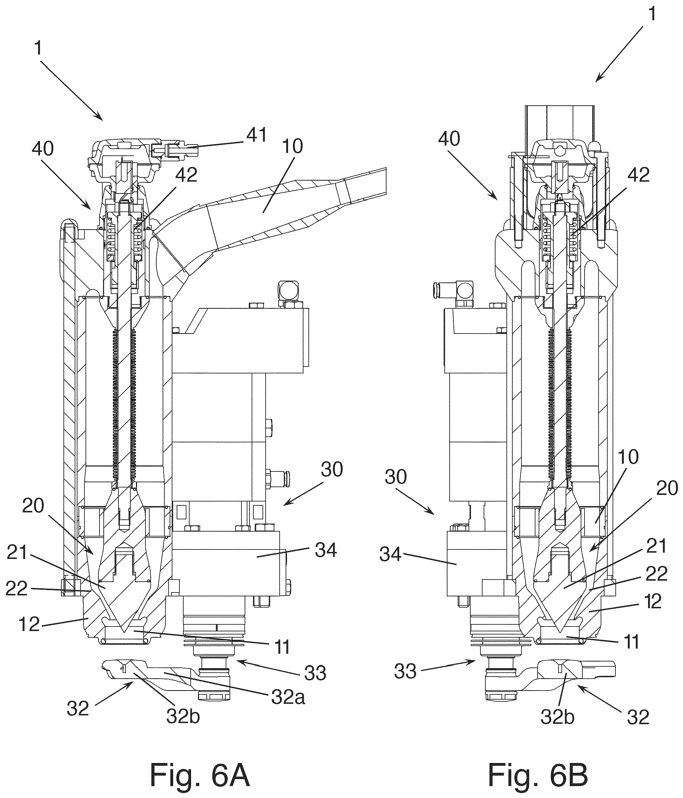

Die Figuren 6A und 6B zeigen ein Füllorgan 1 mit einer CIP-Kappeneinrichtung 32 als Ausrüstungsmittel in einem Zustand, in dem die CIP-Kappe 32b eingeschwenkt ist, d.h. sich unterhalb des Produktauslasses 11 befindet.

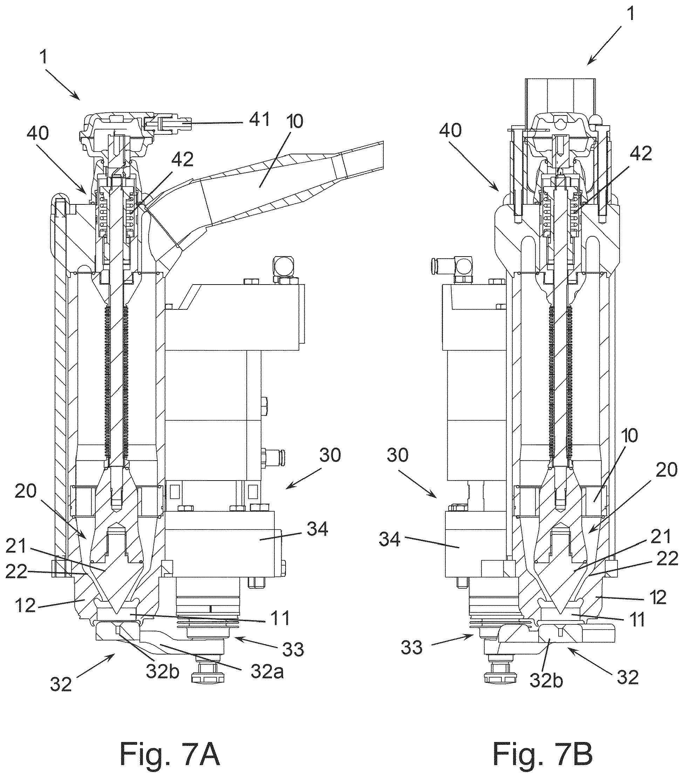

Die Figuren 7A und 7B zeigen das Füllorgan 1 gemäß dem Ausführungsbeispiel der Figuren 6A und 6B in einem Zustand, hierin auch als "CIP-Zustand" bezeichnet, in dem sich die CIP-Kappe 32b angedrückt an das Ventilgehäuse 12 in der Arbeitsposition befindet.

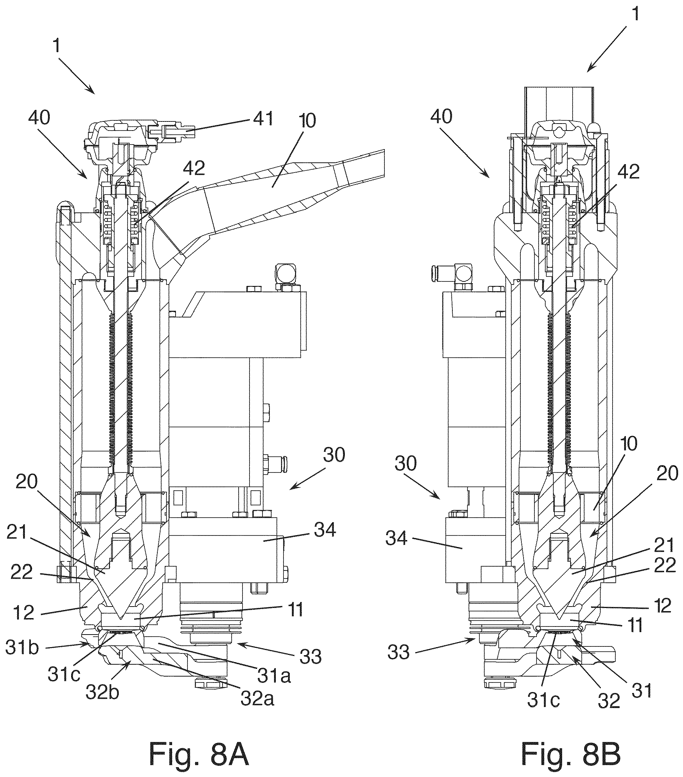

Die Figuren 8A und 8B zeigen ein Füllorgan 1 mit einer Siebeinrichtung 31 und einer CIP-Kappeneinrichtung 32 in einem Zustand, hierin auch als "Sieb/CIP-Zustand" bezeichnet, in dem sich sowohl die Siebkappe 31b als auch die CIP-Kappe 32b in der Arbeitsposition befinden. In diesem kombinierten Zustand ist die Siebkappe 31b angedrückt an das Ventilgehäuse 12, während die CIP-Kappe 32b unmittelbar darunter an die Siebkappe 31b angedrückt ist.

Während im Fall mehrerer Ausrüstungsmittel diese in den vorstehend dargelegten Ausführungsbeispielen unabhängig voneinander schwenkbar sind, können mehrere Ausrüstungsmittel an einer einzigen Schwenkwelle 33a oder 33b angebracht sein. So kann an der Schwenkwelle 33a beispielsweise eine Mehrzahl von Siebeinrichtungen 31a angebracht sein, alternativ oder zusätzlich kann am Schwenkarm 31a eine Mehrzahl von Siebkappen 31b angebracht sein, so dass diese wie ein Magazin "durchgeschaltet" werden können. Dies gilt analog für etwaige andere Ausrüstungsmittel, wie etwa die CIP-Kappeneinrichtung 32. Auch unterschiedliche Ausrüstungsmittel können an ein und derselben Schwenkwelle angebracht sein.

Die hierin beschriebenen Füllorgane 1 ermöglichen einen besonders variablen Betrieb, insbesondere im Fall des Freistrahlfüllens. Klare Produkt, wie beispielsweise Wasser, können mit eingefahrenem Sieb 31c abgefüllt werden, wodurch eine etwaige Kontamination des abgefüllten Produkts durch Fremdpartikel unterbunden oder zumindest vermindert werden kann. Das Sieb 31c fungiert hierbei als letzte Barriere für Partikel oder Fremdkörper. Viskose Füllprodukte oder Produkte mit Fasern und/oder Fruchtstücken, beispielsweise, können ohne Sieb 31c abgefüllt werden, wodurch das Füllorgan 1 hochflexibel verwendbar ist. Die Füllkurve kann bei eingefahrenem Sieb 31c gegebenenfalls angepasst werden.

Das Sieb 31c kann ferner das Nachtropfverhalten verbessern, indem die Öffnungen bzw. Maschen des Siebs 31c so dimensioniert und angeordnet sind, dass ein unkontrolliertes Nachtropfen, beispielsweise von Flüssigkeit, die am unteren Bereich des Ventilkegels 21 anhaftet, verhindert oder zumindest vermindert wird.

Zur Reinigung des Siebs 31c kann dieses im ein- oder ausgefahrenen Zustand von unten mit einem Reinigungsstrahl aus einer entsprechenden Düse beaufschlagt und so von unten ausgespritzt werden.

Der Ausrüstungsabschnitt 30 kann zudem synergetisch zur flexiblen Anwendung eines oder mehrerer weiterer Ausrüstungsmittel, wie etwa der CIP-Kappe 32b, genutzt werden. Daraus ergibt sich als mögliche Variante eine kombinierte Nutzung beider Ausrüstungsmittel, so dass beispielsweise verschiedene Möglichkeiten der Reinigung und/oder Sterilisation des Füllorgans 1 mit oder ohne Sieb 31c realisierbar sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Füllorgan
- 10: Produktkanal
- 11: Produktauslass
- 12: Ventilgehäuse
- 20: Füllventil
- 21: Ventilkegel
- 22: Ventilsitz
- 30: Ausrüstungsabschnitt
- 31: Siebeinrichtung
- 31a: Schwenkarm
- 31b: Siebkappe
- 31c: Sieb
- 31d: Stabilisierungsabschnitt
- 32: CIP-Kappeneinrichtung
- 32a: Schwenkarm
- 32b: CIP-Kappe
- 33: Schwenkeinrichtung
- 33a: Schwenkwelle
- 33b: Schwenkwelle
- 34: Aktuator
- 40: Aktuator
- 41: Medienanschluss
- 42: Feder

## Patentansprüche

1. Füllorgan (1) zum Befüllen eines Behälters mit einem Füllprodukt, vorzugsweise in einer Getränkeabfüllanlage, das aufweist:
einen Produktauslauf (11), der eingerichtet ist, um das Füllprodukt in einen darunter befindlichen Behälter abzugeben; und
einen Ausrüstungsabschnitt (30), der als ein erstes Ausrüstungsmittel eine Siebeinrichtung (31) mit einem Sieb (31c) aufweist und eingerichtet ist, um das Sieb (31c) bedarfsweise in einen Siebzustand, in dem sich das Sieb (31c) zwischen dem Produktauslauf (11) und dem Behälter befindet, so dass das Füllprodukt beim Einleiten in den Behälter durch das Sieb (31c) gefiltert wird, und aus dem Siebzustand heraus zu überführen.

2. Füllorgan (1) nach Anspruch 1, **dadurch gekennzeichnet, dass** die Siebeinrichtung (31) eine das Sieb (31c) aufweisende Siebkappe (31b) aufweist und der Ausrüstungsabschnitt (30) eingerichtet ist, um die Siebkappe (31b) im Siebzustand so gegen einen Gehäuseabschnitt des Füllorgans (1) zu drücken, dass die Siebkappe (31b) den Produktauslauf (11) fluiddicht umgibt, um zu verhindern, dass Füllprodukt am Sieb (31c) vorbei aus dem Produktauslauf (11) austritt.

3. Füllorgan (1) nach Anspruch 1 oder 2, **dadurch gekennzeichnet, dass** die Bewegung der Siebeinrichtung (31) in den und aus dem Siebzustand eine Schwenkbewegung umfasst, wobei die Siebeinrichtung (31) vorzugsweise einen Schwenkarm (31a) aufweist, der an einer Schwenkwelle (33a) des Ausrüstungsabschnitts (30) gehalten und durch diese schwenkbar ist.

4. Füllorgan (1) nach einem der vorigen Ansprüche, **dadurch gekennzeichnet, dass** die Bewegung der Siebeinrichtung (31) in den und aus dem Siebzustand eine translatorische Bewegung umfasst, vorzugsweise in Axialrichtung des Produktauslaufs (11).

5. Füllorgan (1) nach einem der vorigen Ansprüche, **dadurch gekennzeichnet, dass** dieses für das Freistrahlfüllen konzipiert ist.

6. Füllorgan (1) nach einem der vorigen Ansprüche, **dadurch gekennzeichnet, dass** dieses einen mit dem Produktauslauf (11) in Fluidverbindung stehenden Produktkanal (10) und ein Füllventil (20) mit einem im Produktkanal (10) angeordneten Ventilkegel (21), einem zumindest abschnittsweise komplementär geformten Ventilsitz (22) sowie einem Aktuator (40) aufweist, der zur Verschiebung des Ventilkegels (21) entlang einer Axialrichtung des Produktauslaufs (11) eingerichtet ist, so dass der Ventilkegel (21) zur Sperrung des Produktauslaufs (11) in den Ventilsitz (22) und zur Öffnung des Produktauslaufs (11) aus diesem heraus fahrbar ist.

7. Füllorgan (1) nach einem der vorigen Ansprüche, **dadurch gekennzeichnet, dass** der Ausrüstungsabschnitt (30) zusätzlich zur Siebeinrichtung (31) zumindest ein weiteres Ausrüstungsmittel aufweist und eingerichtet ist, um das weitere Ausrüstungsmittel in einen Zustand unterhalb des Produktauslaufs (11) und aus diesem Zustand heraus zu überführen.

8. Füllorgan (1) nach Anspruch 7, **dadurch gekennzeichnet, dass** zumindest eines der weiteren Ausrüstungsmittel eine Siebeinrichtung mit einem Sieb ist, dessen Filtercharakteristik sich vom Sieb (31c) des ersten Ausrüstungsmittels unterscheidet.

9. Füllorgan (1) nach Anspruch 7 oder 8, **dadurch gekennzeichnet, dass** zumindest eines der weiteren Ausrüstungsmittel eine CIP-Kappeneinrichtung (32) mit einer CIP-Kappe (32b) und der Ausrüstungsabschnitt (30) eingerichtet ist, um die CIP-Kappe (32b) bedarfsweise, vorzugsweise für einen Reinigungs- und/oder Sterilisierungsbetrieb, in einen CIP-Zustand, in dem die CIP-Kappe (32b) den Produktauslauf (11) verschließt, und aus dem CIP-Zustand heraus zu überführen.

10. Füllorgan (1) nach Anspruch 9, **dadurch gekennzeichnet, dass** die Bewegung der CIP-Kappeneinrichtung (32) in den und aus dem CIP-Zustand eine Schwenkbewegung umfasst, wobei die CIP-Kappeneinrichtung (32) vorzugsweise einen Schwenkarm (32a) aufweist, der an einer Schwenkwelle (33b) des Ausrüstungsabschnitts (30) gehalten und durch diese schwenkbar ist.

11. Füllorgan (1) nach Anspruch 9 oder 10, **dadurch gekennzeichnet, dass** die Bewegung der CIP-Kappeneinrichtung (32) in den und aus dem Siebzustand eine translatorische Bewegung umfasst, vorzugsweise in einer Axialrichtung des Produktauslaufs (11).

12. Füllorgan (1) nach einem der Ansprüche 9 bis 11, **dadurch gekennzeichnet, dass** der Ausrüstungsabschnitt (30) eingerichtet ist, um das Sieb (31c) und die CIP-Kappe (32b) in einen Sieb/CIP-Zustand, in dem sich sowohl das Sieb (31c) als auch die CIP-Kappe (32b) unterhalb des Produktauslaufs (11) befinden, und aus dem Sieb/CIP-Zustand heraus zu überführen.

13. Füllorgan (1) nach Anspruch 12, **dadurch gekennzeichnet, dass** die Siebeinrichtung (31) eine das Sieb (31c) aufweisende Siebkappe (31b) aufweist und der Ausrüstungsabschnitt (30) so eingerichtet ist, dass sich im Sieb/CIP-Zustand die Siebkappe (31b) angedrückt am Ventilgehäuse befindet, während die CIP-Kappe (32b) unmittelbar darunter an die Siebkappe (31b) angedrückt ist.

14. Füllorgan (1) nach einem der vorigen Ansprüche, **dadurch gekennzeichnet, dass** das Sieb (31c) wechselbar ausgeführt ist.

15. Füllorgan (1) nach einem der Ansprüche 1 bis 13, **dadurch gekennzeichnet, dass** das Sieb (31c) einstückig mit einer Siebeinrichtung (31) und insbesondere einstückig mit einem Schwenkarm (31a) der Siebeinrichtung (31) ausgebildet ist und das Sieb (31c) besonders bevorzugt in das Material der Siebeinrichtung (31) und/oder des Schwenkarms (31a) eingearbeitet ist und besonders bevorzugt mittels eines Lasers in das Material eingebracht ist.
